# EUROPEAN PATENT APPLICATION

(11) **EP 2 017 227 A1**
(43) Date of publication of application: **21.01.2009**
(21) Application number: 06833905.0
(22) Date of filing: 28.11.2006
(51) Int. Cl.: C01G 49/00, C02F 1/58, C02F 1/62, C02F 1/72, C02F 1/74, C22B 3/44, C22B 7/00, C22B 30/04

(54) **METHOD OF TREATING ARSENIC-CONTAINING SOLUTION**

(30) Priority: 28.04.2006 JP 2006126896; 22.08.2006 JP 2006225761
(71) Applicant: Dowa Metals & Mining Co., Ltd., Chiyoda-ku Tokyo 101-8617 (JP)
(72) Inventor: FUJITA, Tetsuo, Akita-shi, Akita 011-0941 (JP); TAGUCHI, Ryoichi, Akita-shi, Akita 019-2623 (JP)
(74) Representative: Manitz, Finsterwald & Partner GbR
(86) International application number: PCT/JP2006/324135
(87) International publication number: WO 2007/125627

(57) **Abstract**

There is provided a method for recovering a powder of a compound of iron and arsenic, which has a very low concentration of arsenic eluted from the powder, by treating an arsenic containing solution, e.g., a high purity and high concentration arsenic containing solution obtained by treating an arsenic containing substance which contains various elements other than arsenic, such as an intermediate product in a non-f errous metal smelting or refining process. Ferrous ions are added to an arsenic containing solution, which contains 10 g/L or more of arsenic, so as to cause the ratio (Fe/As) of iron to arsenic in the solution to be not less than 1, and an oxidizing agent is added to the solution to allow a reaction at a temperature of not lower than 70 °C while stirring the solution. Then, a solid-liquid separation is carried out, and a solid part separated by the solid-liquid separation is dried.

## Description

### Technical Field

The present invention relates generally to a method for treating an arsenic containing solution. More specifically, the invention relates to a method for treating an arsenic containing solution, e.g., a high purity and high concentration arsenic containing solution obtained by treating an arsenic containing substance which contains various elements other than arsenic, such as intermediate products in non-ferrous metal smelting or refining processes.

### Background Art

Various intermediate products and raw materials produced in non-ferrous metal smelting or refining processes contain unfavorable elements, such as arsenic, although they contain valuable metals.

As a conventional method for leaching, separating and recovering arsenic from arsenic containing intermediate products in smelting or refining processes, there has been proposed a method for separating arsenic from an arsenic containing intermediate product by a wet reaction to recover an arsenic containing solution (see, e.g., Japanese Patent Publication No. 61-24329). There is also proposed a method for removing and fixing arsenic, which exists in an iron arsenate solution, as a stable crystalline compound of iron and arsenic, which does not elute or release metals (see, e.g., Japanese Patent Laid-Open No. 11-277075). In addition, there is proposed a method for adding at least one of an iron (II) solution and an iron (III) solution to an arsenic containing solution to allow a reaction to form Scorodite (FeAsO₄ • 2H₂O) to carry out a solid-liquid separation to recover the Scorodite, which contains non-ferrous metals including copper, to add water to the obtained Scorodite, which contains the non-ferrous metals including copper, to carry out repulping to dissolve the non-ferrous metals including copper, which are contained in the Scorodite, in the solution to separate the non-ferrous metals including copper from the Scorodite (see, e.g., Japanese Patent Laid-Open No. 2000-219920). Moreover, there is proposed a method for leaching arsenic from an arsenic containing flue cinder with an acid solution to mix the leached arsenic containing solution with an aqueous acidic solution containing iron ions to precipitate amorphous ferric arsenate (FeAsO₄) to heat the mixed solution to crystallize the amorphous ferric arsenate to filter the mixed solution to remove the crystallized ferric arsenate (see, e.g., Japanese Patent Laid-Open No. 2005-161123) . In addition, there is reported the evaluation of stability of ferric arsenate and so forth as compounds of iron and arsenic (see, e.g., Reprint from the Bulletin of the Research Institute of Mineral Dressing and Metallurgy, Tohoku University, Vol.34, No.1, Extra Edition (June, 1978), Report of the Institute of Mineral Dressing and Metallurgy, No. 764, "On the Solubility Products of Ferric, Calcium and Magnesium Arsenates (by Tadahisa Nishimura and Kazuteru Tozawa)").

Japanese Patent Publication No. 61-24329 has proposed the method for recovering an arsenic containing solution, but it does not propose a method for fixing the recovered arsenic containing solution as a stable substance which does not elute metals. In addition, it is desired to form a compound of iron and arsenic which is more stable and is more difficult to elute metals than conventional compounds of iron and arsenic produced by the methods proposed in Japanese Patent Laid-Open Nos.11-277075,2000-219920and2005-161123, and than conventional compounds of iron and arsenic, such as iron arsenate, reported in the above described "On the Solubility Products of Ferric, Calcium and Magnesium Arsenates" by Nishimura et al.. Particularly, there is a problem in that it takes a lot of time to carry out the method proposed in Japanese Patent Laid-Open No. 2005-161123, since amorphous iron arsenate is crystallized after the amorphous iron arsenate is precipitated.

### Disclosure of the Invention

It is therefore an object of the present invention to eliminate the aforementioned conventional problems and to provide a method for recovering a compound of iron and arsenic, which has a very low concentration of arsenic eluted or released from the recovered compound, by treating an arsenic containing solution, e.g., a high purity and high concentration arsenic containing solution obtained by treating an arsenic containing substance which contains various elements other than arsenic, such as an intermediate product in a non-ferrous metal smelting or refining process.

In order to accomplish the aforementioned object, the inventors have diligently studied and found that it is possible to recover a compound of iron and arsenic, which has a very low concentration of arsenic eluted from the recovered compound, if ferrous ions (or bivalent iron ions) are added to an arsenic containing solution, which contains 10 g/L or more of arsenic, so as to cause the ratio (Fe/As) of iron to arsenic in the solution to be not less than 1, to add an oxidizing agent to the solution to allow a reaction at a temperature of not lower than 70 °C while stirring the solution, and then, to carry out a solid-liquid separation to recover a solid part. Thus, the inventors have made the present invention.

That is, a method for treating an arsenic containing solution according to the present invention comprises the steps of: adding ferrous ions to an arsenic containing solution, which contains 10 g/L or more of arsenic, so as to cause a ratio (Fe/As) of iron to arsenic in the solution to be not less than 1; adding an oxidizing agent to the solution to allow a reaction at a temperature of not lower than 70 °C while stirring the solution; carrying out a solid-liquid separation of the solution after the reaction; and recovering a solid part separated by the solid-liquid separation.

In this method for treating an arsenic containing solution, the concentration of arsenic in the arsenic containing solution is not preferably less than 20 g/L. In addition, iron sulfate (II) with seven hydrate salts (FeSO₄ • 7H₂O is preferably added to the arsenic containing solution as the ferrous ions. Moreover, the oxidizing agent may be oxygen gas.

In the above described method for treating an arsenic containing solution, the arsenic containing solution is preferably produced by a method comprising the steps of: adding an arsenic containing substance to an alkali solution to adjust the solution to a pH of not lower than 10 to leach the arsenic containing substance with alkali while oxidizing the arsenic containing substance, and then, carrying out a solid-liquid separation to obtain a leached arsenic containing solution; adding an alkaline earth metal or a salt thereof to the leached arsenic containing solution, and then, carrying out a solid-liquid separation to obtain a residue containing a compound of arsenic and the alkaline earth metal; and washing the residue to add the washed residue to a sulfuric acid solution, and then, carrying out a solid-liquid separation to obtain an arsenic containing solution. In this case, a substance containing sulfur and arsenic is preferably used as the arsenic containing substance when the arsenic containing solution is produced, and the amount of the alkaline earth metal or salt thereof to be added to the leached arsenic containing solution is not preferably less than the required amount of the alkaline earth metal or salt thereof to form the compound of arsenic and the alkaline earth metal. Alternatively, the method for treating an arsenic containing solution may further comprise the step of adding sulfur to the arsenic containing substance or the leached arsenic containing solution if the arsenic containing substance contains no sulfur when the arsenic containing solution is produced, and the amount of the alkaline earth metal or salt thereof to be added to the leached arsenic containing solution is not preferably less than the required amount of the alkaline earth metal or salt thereof to form the compound of arsenic and the alkaline earth metal.

According to the present invention, it is possible to recover a powder of a compound of iron and arsenic, which has a very low concentration of arsenic eluted from the powder, by treating an arsenic containing solution, e.g., a high purity and high concentration arsenic containing solution obtained by treating an arsenic containing substance which contains various elements other than arsenic, such as an intermediate product in a non-ferrous metal smelting or refining process.

### Brief Description of the Drawings

FIG. 1 is a process drawing which schematically shows the preferred embodiment of a method for treating an arsenic containing solution according to the present invention;
FIG. 2 is a scanning electron microphotograph (SEM) of a powder obtained in Example 2; and
FIG. 3 is a chart showing X-ray diffraction (XRD) data of a powder obtained in Example 2.

### Best Mode for Carrying Out the Invention

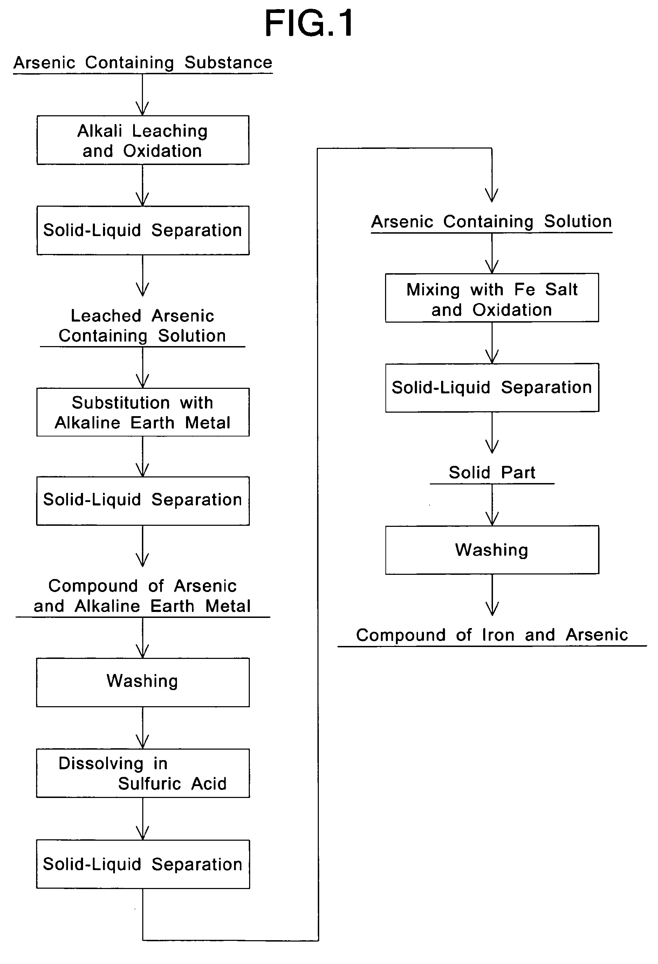

FIG. 1 is a process drawing which schematically shows the preferred embodiment of a method for treating an arsenic containing solution according to the present invention. As shown in FIG. 1, in the preferring embodiment of a method for treating an arsenic containing solution according to the present invention, an arsenic containing solution is produced by a method for producing an arsenic containing solution, which comprises: (1) an alkali leaching/oxidizing process for adding an arsenic containing substance to an alkali solution to adjust the arsenic containing substance to a pH of not lower than 10, preferably not lower than 12, to leach the arsenic containing substance with alkali while oxidizing the arsenic containing substance, and then, carrying out a solid-liquid separation to obtain a leached arsenic containing solution; (2) an alkaline earth metal substituting process for adding an alkaline earth metal or a salt thereof to the leached arsenic containing solution, and then, carrying out a solid-liquid separation to obtain a residue containing a compound of arsenic and the alkaline earth metal; (3) a washing process for washing the residue to remove the alkali solution adhering thereto; and (4) a sulfuric acid dissolving process for adding the washed residue to a sulfuric acid solution, and then, carrying out a solid-liquid separation to obtain a high purity and high concentration arsenic containing solution. The method for treating an arsenic containing solution in this preferred embodiment includes (5) a process for adding an iron salt to the arsenic containing solution to allow a reaction to carry out a solid-liquid separation to wash the obtained solid part, and then, carrying out a solid-liquid separation to obtain a compound of iron and arsenic. The crystal grain size of the compound of iron and arsenic thus obtained is large, and the concentration of arsenic eluted from the compound is very low, so that the compound of iron and arsenic can be discarded, deposited and stored. Each of these processes will be described below.

Furthermore, as the arsenic containing substance serving as a raw material in the above described method for producing an arsenic containing solution, a substance containing sulfur and arsenic, e.g., a sulfide, such as arsenic sulfide (As₂S₃) or FeAsS, may be used. Also, a residue containing copper arsenide (Cu₃As), which is obtained by a zinc smelting process or the like, as a main component may be used. The residue containing copper arsenide as a main component contains valuablemetals, such as indium and gallium, in addition to zinc and iron. If the arsenic containing substance to be treated by the preferred embodiment of a method for treating an arsenic containing solution does not contain sulfur, it is required to cause SO₄ ions to exist in the leached arsenic containing solution before the alkaline earth metal substituting process, by adding a sulfate, such as Na₂SO₄ salt, or the like before the alkali leaching/oxidizing process or by adding a sulfate or the like to the leached arsenic containing solution after the alkali leaching/oxidizing process. The arsenic containing substance may contain at least one of copper (Cu), zinc (Zn), iron (Fe), indium (In), gallium (Ga), tin (Sn), antimony (Sb), lead (Pb), cadmium (Cd), sodium (Na), potassium (K), magnesium (Mg) and calcium (Ca), in addition to arsenic (As) and sulfur (S).

### (1) Alkali Leaching/Oxidizing Process

First, the above described arsenic containing substance, together with an oxidizing agent, is added to an alkali solution to adjust the solution to a pH of not lower than 10, preferably a pH of not lower than 12, and then, heated at a temperature of 50 to 100 °C to be allowed to react while stirring the solution. Thus, the arsenic containing substance is leached while being oxidized. The reaction in this alkali leaching /oxidizing process is caused in a strong alkaline solution at a pH of not lower than 10, preferably at a pH of not lower than 12, and the reaction rate thereof is very high.

By this alkali leaching, As is leached without leaching Cu, so that Cu can be separated from As. In this alkali leaching, In, Pb, Cd and Mg are not leached, and Fe, Sn, Sb and Ca are hardly leached. However, Ga is not separated from As at this stage, since Ga is nearly leached.

Furthermore, Zn is not leached if the concentration of alkali is low, although Zn is leached if the concentration of alkali is high. Therefore, the concentration of alkali is preferably determined in view of the grades of Zn and As and the leaching behavior of other impurities (particularly Sn and Sb) in the arsenic containing substance. That is, Zn preferably remains in the residue if the grades of Sn and Sb are low, and Zn is preferably dissolved to some extent if the grades of Sn and Sb are high.

As the alkali solution, an NaOH solution may be used. In this case, the concentration of NaOH in the solution is preferably in the range of from 50 g/L to 300 g/L.

As the oxidizing agent, a solid oxidizing agent, such as potassium permanganate, may be used. In addition, hydrogen peroxide, ozone or the like may be used. Moreover, air or concentrated oxygen may be used. In this case, if gas is blown into the solution to cause bubbling and stirring, oxidation easily proceeds.

After the alkali leaching, a solid-liquid separation is carried out. This solid-liquid separation may be a usual filtration, such as a filtration using any one of filter press, centrifugation, decanter and belt filter. The kind and conditions thereof are determined in view of filterability, dewaterbility, washability and so forth.

On the other hand, the solid part after the solid-liquid separation can be effectively utilized in smelting processes, since it includes metallic compounds containing valuable Cu, In and so forth, and partially oxidized compounds. Furthermore, in a copper smelting process, the solid part may be inputted directly into a flash smelting (or autogenous smelting) furnace or a reverberatory furnace to prepare an anode.

### (2) Alkaline Earth Metal Substituting Process

Then, an alkaline earth compound is added to the leached arsenic containing solution (a solution mainly containingNa and As) after the solid-liquid separation. If an alkaline earth compound, such as CaO, is added to the leached arsenic containing solution leached with alkali, the alkaline earth metal of the alkaline earth compound is allowed to react with arsenic to form a compound of the alkaline earth metal and arsenic and to regenerate an alkali solution, such as an NaOH solution.

An excessive amount of alkaline earth compound for causing the above described reaction is added so as to cause SO₄ salts or ions to be included in the regenerated alkali solution to prevent the alkaline earth metal from being included in the alkali solution. When the regenerated alkali solution includes no SO₄ salts and is a substantially pure alkali solution, if the alkaline earth compound is excessively added, the alkaline earth metal is dissolved in the regenerated alkali solution.

If the alkaline earth metal exists in the regenerated alkali solution, when the alkali solution is reused in the arsenic leaching process, the alkaline earth metal is allowed to react with arsenic to form a precipitate having a low solubility, so that there are some cases where the leaching rate in the alkali leaching process is extremely low. On the other hand, if the alkaline earth metal is not excessively added, arsenic remains in the alkali solution without being removed, so that the efficiency of recovery of arsenic is very bad. In addition, when SO₄ exists in the alkali solution, if CaO is used as the alkaline earth compound, CaO or Ca (OH) ₂ remains in the solid part without being dissolved. That is, if the concentrations of Na⁺ and SO₄²⁻ are high, the solubility of Ca²⁺ is suppressed so as to be very low, so that CaO remains in the solid part.

The amount of the alkaline earth to be added may be equivalent to the alkaline earth for forming a compound of arsenic and the alkaline earth metal thereof. However, the amount of the alkaline earth to be added is preferably slightly richer than the equivalent to the alkaline earth for forming the compound so as to form Ca(OH)₂ by adding the alkaline earth to Ca₃ (AsO₄)₂.

### (3) Washing Process

Then, the compound of arsenic and the alkaline earth metal, which is obtained as a solid part and to which the alkali solution adheres, is washed. In this washing process, it is required to cause arsenic to remain in the solid part, since it is required to carry out complicated operations for removing arsenic in a waste wash water if arsenic is dissolved in the waste wash water. In order to avoid such operations, it is required to prevent arsenic from being removed while the alkali solution is removed by washing. In order to allow such washing, the alkaline earth is preferably rich so that the solution is alkaline when the alkaline earth is added as described above. In addition, if the alkaline earth is rich, the alkali solution is not only washed in the washing process, but the alkaline earth metal is also preferentially dissolved, so that the compound of arsenic and the alkaline earth metal is held as it is. Furthermore, the amount of the alkaline earth to be added is preferably more excessive than the required amount of the alkaline earth, which is allowed to react with arsenic, by 0.5 to 1.0 % by weight although the amount of the alkaline earth to be added increases as the amount of wash water increases.

### (4) Sulfuric Acid Dissolving Process

Then, the washed compound of arsenic and the alkaline earth metal is added to a sulfuric acid solution to be allowed to react while being strongly stirred. Then, arsenic is dissolved again, and gypsum is formed. The compound of arsenic and the alkaline earth metal is insoluble on the side of alkali, but almost all of the compound is dissolved if the pH is not higher than 4. Therefore, if the pH is caused to be not higher than 4 with a mineral acid, it is possible to dissolve almost all of the compound. However, in order to separate arsenic from the alkaline earth metal, the gypsum is preferably separated from the arsenic containing solution with sulfuric acid. If the compound of arsenic and the alkaline earth metal is added to the sulfuric acid solution, the depositing reaction of the alkaline earth and a sulfate is caused simultaneously with the dissolving of arsenic.

The concentration of sulfuric acid in the sulfuric acid solution is preferably in the range of from 100 g/L to 500 g/L, and more preferably in the range of from 150 g/L to 300 g/L. If the concentration of arsenic in the arsenic containing solution is intended to be increased, it is required to increase the concentration of sulfuric acid in the sulfuric acid solution, but this is not desired, since the concentration of sulfuric acid in the sulfuric acid solution adhering to the formed gypsum is increased and the viscosity of the solution is also increased. However, in order to prevent unreacted arsenic, water may be added to deposit the gypsum by hydrolysis after the compound of arsenic and the alkaline earth metal is added to concentrated sulfuric acid to dissolve arsenic as well as the gypsum.

Preferably, stirring is strongly carried out. The dissolving reaction of arsenic is preferably carried out simultaneously with the depositing reaction of the gypsum, and the compound in a wet cake state is preferably inputted to the sulfuric acid solution. In addition, local neutralization and so forth are easily caused in the reaction system. Therefore, in order to uniformly and completely cause the reaction, it is required to strongly stir the solution to cause arsenic to sufficiently contact sulfuric acid to form a high purity and high concentration arsenic containing solution.

### (5) Process for forming Compound of Fe and As

Then, ferrous ions are added to the obtained arsenic containing solution to cause the molar ratio (Fe/As) of iron to arsenic in the solution to be not lower than 1, and an oxidizing agent is added thereto. Then, the solution is heated to a temperature of not lower than 70 °C while being stirred. After the reaction is thus allowed, a solid-liquid separation is carried out, and a solid part thus obtained is dried.

The concentration of As in the arsenic containing solution is not required to be so high, if the concentration of Na and so forth as impurities included in the solution is not higher than 1 g/L. If the concentration of As is low, it tends to be difficult to increase the grain size of the compound of Fe and As during the growth of the compound after the deposition of the compound. Therefore, the concentration of As is preferably 10 g/L or higher, and more preferably 20 g/L or higher. In addition, the pH of the arsenic containing solution is preferably 2 or lower. Furthermore, if the concentration of As in the arsenic containing solution is high, salts of Na, Mg, Cu, Zn, Mn and so forthmay coexist in the solution as impurities.

As the ferrous ion source, soluble FeSO₄ •7H₂O is preferably used. The molar ratio (Fe/As) of iron to arsenic in the solution is preferably 1 or higher, and more preferably in the range of from about 1.0 to about 1.5.

As the oxidizing agent, any one of oxidizing agents capable of oxidizing Fe²⁺ may be used. Any one of oxidizing agents capable of controlling the oxidizing velocity (reaction rate) thereof is preferably used, and oxygen gas or air is preferably used. If KMnO₄ or the like is used as the oxidizing agent, the oxidizing velocity thereof can be controlled by adjusting the amount of the oxidizing agent to be added.

If the reaction temperature is 50 °C or higher, the compound of Fe and As can be deposited. In order to decrease the concentration of elutedAs, the reaction temperature is preferably 70 °C or higher, and more preferably in the range of from about 80 °C to about 95 °C. The reaction time may be in the range of from 1 hour to 3 hours. Furthermore, arsenic is preferably quinquevalent arsenic.

Examples of a method for treating an arsenic containing solution according to the present invention will be described below in detail.

### Example 1

First, an arsenic containing substance of composition shown in Table 1 was prepared as a raw material. Then, 400g of the arsenic containing substance was added to 4L of an NaOH solution (Na concentration: 57.5 g/L) having an NaOH concentration of 100 g/L. Then, the solution was heated to 90 °C, and air (gas/liquid ratio = 0.5) was blown into the solution at a flow rate of 2 L/min to allow the solution to react for one hour while stirring the solution. Thus, the arsenic containing substance was leached with alkali while being oxidized. Furthermore, the pH of the solution was about 12 after the arsenic containing substance was added to the NaOH solution.

**Table 1**

| | | | | | | | |
|---|---|---|---|---|---|---|---|
| Cu | As | Zn | Fe | In | Ga | Sn | Sb |
| (%) | (%) | (%) | (%) | (ppm) | (ppm) | (ppm) | (%) |
| 54.92 | 16.84 | 2.55 | 2.47 | 1324 | 134 | 755 | 1.28 |
| Pb | Cd | Na | K | Mg | Ca | S | |
| (ppm) | (ppm) | (ppm) | (ppm) | (ppm) | (ppm) | (%) | |
| 3073 | 528 | 349 | 188 | 2033 | 7854 | 2.7 | |

Then, after the solution was cooled to 70 °C, a membrane filter of PTFE (polytetrafluoroethylene) having a pore size of 3 microns was used in a pressure filter for pressurizing the solution at 0.4 MPa to carry out a solid-liquid separation so as to separate a residue (a residue after leaching with alkali) remaining on the filter from a filtrate (a solution after leaching with alkali) passing through the filter. The water content of the obtained residue after leaching was 20%, and the weight thereof was 600 g.

Then, industrial quick lime (CaO) having a purity of 95 % was added to the solution after leaching with alkali. Then, the solution was heated to 60 °C to be allowed to react for one hour while being stirred. Thus, a compound of Ca and As was obtained as a solid part, and an NaOH solution was regenerated. By this substitution reaction, the temperature of the solution was raised from 60 °C to 80°C. Furthermore, the amount of the industrial quick lime to be added was equivalent to CaO, which was sufficient for the substitution of the solution after leaching with alkali, in view of the concentration of NaOH in the NaOH solution which was added for carrying out the leaching with alkali. In addition, in order to avoid the increase of the concentration of CaO, water was supplied so as to maintain the constant amount of the solution after leaching with alkali, since water (H₂O) was consumed if CaO was added.

Then, after the solution was cooled to 70 °C, a solid-liquid separation was carried out by means of a pressure filter. The obtained residue (the solid part of salts of arsenic and alkaline earth metals) contained 20 % of water, and the concentration thereof was 158 g/L.

Then, in order to remove the alkali components adhering to the solid part after the solid-liquid separation, repulping washing was carried out at a pulp concentration of 200 g/L to be repeated three times. In each of the repulping washing operations, the solution was allowed to react at 60 °C for one hour while being stirred. Thereafter, a membrane filter of PTFE having a pore size of 3 microns was used in a pressure filter for pressurizing the solution at 0.4 MPa to carry out a solid-liquid separation so as to separate a residue (a solid part containing calcium and arsenic after washing) remaining on the filter from a filtrate (a solution after washing) passing through the filter.

Then, 1912 g of the residue after washing (the solid part of calcium and arsenic having a water content of 20 %) was added to 5.59 L of a 200 g/L sulfuric acid solution so as to adjust the solution to pH 1. Then, the solution was allowed to react at 50 °C for two hours while being strongly stirred, so that the residue was dissolved again. By this substitution reaction, the temperature of the solution was raised from 50 °C to 80 °C.

Thereafter, a membrane filter of PTFE having a pore size of 3 microns was used in a pressure filter for pressurizing the solution at 0.4 MPa to carry out a solid-liquid separation so as to separate a residue (gypsum) remaining on the filter from a filtrate (an arsenic containing solution) passing through the filter. The composition of the filtrate thus obtained was analyzed. As shown in Table 2, the filtrate was a solution in which the concentrations of impurities, such as alkaline earth metals, were very low and in which a high concentration of arsenic was contained, and the pH of the filtrate was 1.0.

**Table 2**

| | | | | | | | |
|---|---|---|---|---|---|---|---|
| Cu | As | Zn | Fe | In | Ga | Sn | Sb |
| (mg/L) | (g/L) | (mg/L) | (mg/L) | (mg/L) | (mg/L) | (mg/L) | (mg/L) |
| 56 | 72.21 | 66 | 82 | 1 | 2 | 42 | 403 |
| Pb | Cd | Na | K | Mg | Ca | S | |
| (mg/L) | (mg/L) | (g/L) | (mg/L) | (mg/L) | (mg/L) | (g/L) | |
| 0 | 0 | 1.09 | 19 | 448 | 797 | 5.61 | |

Then, 486 mL of the arsenic containing solution thus obtained, and 214 mL of a solution (the total of this solution and the arsenic containing solution was 700 mL), which was prepared by adding water to first grade FeSO₄ · 7H₂O so as to allow the concentration of Fe to be 183 g/L, were placed in a 1L closed vessel (reaction vessel) of titanium (As concentration: 50.13 g/L, Fe concentration: 56.00 g/L, Fe/As ratio = 1.5). Then, the atmosphere in the vessel was allowed to be an atmosphere of an inert gas, and the solution was heated while being stirred by rotating a single flat paddle at 500 rpm. When the temperature in the vessel exceeded 100 °C, the inert gas was removed once, and subsequently, the temperature was raised to a final set temperature of 175 °C. At this time, the pressure in the vessel was raised to 0.8 MPa.

When the temperature in the vessel reached the final set temperature of 175 °C, oxygen gas having a purity of not less than 99 % was blown into the vessel, and the temperature and pressure (the partial pressure of oxygen was set to be 0.2 MPa and the total pressure in the vessel was set to be 1.0 MPa) were held to allow the solution to react for five hours. After five hours, the heating of the vessel was stopped, and the vessel was cooled to a temperature of not higher than 100 °C in about one hour. Thereafter, the vessel was opened to the atmosphere, and the solution was taken out of the vessel. After the temperature of the solution reached 70 °C, a membrane filter of PTFE having a pore size of 3 microns was used in a pressure filter for pressurizing the solution at 0.4 MPa to carry out a solid-liquid separation. The amount of a filtrate (reaction solution) thus obtained was 640 mL.

Furthermore, the filtration velocity (per 1m² of filtration area of the filter) was obtained by measuring the time from the starting of the pressure filtration to the blowing of air through the filter. In addition, the pH and oxidation-reduction potential (ORP) of the separated solution after reaction were measured, and the measurement of the concentration of sulfuric acid (the concentration of free acid (FA)) and component analysis for each element in the solution after reaction were carried out by ICP. These conditions and results are shown in Tables 3 through 5.

**Table 3**

| | Reaction Vessel | Concentration of As (g/L) | Concentration of Fe (g/L) | Fe Source | pH before Reaction | Stirring Speed (rpm) | Reac tion Temp. (°C) | Partial Pressure of O₂ (MPa) | Reaction Time (hr) |
|---|---|---|---|---|---|---|---|---|---|
| Ex.1 | 1L closed | 50.13 | 56.00 | FeSO₄ | 1.0 | 500 | 175 | 0.2 | 5 |
| Ex.2 | 1L closed | 50.13 | 56.00 | reagent FeSO₄ | about 1.0 | 1000 | 95 | 0.2 | 5 |
| Ex.3 | 1L closed | 50.13 | 56.00 | reagent FeSO₄ | about 1.0 | 500 | 175 | 0.2 | 5 |
| Ex.4 | 1L closed | 50.13 | 56.00 | reagent FeSO₄ | about 1.0 | 1000 | 95 | 0.2 | 5 |
| Ex.5 | 2L open | 50.13 | 56.00 | reagent FeSO₄ | 1.02 | 1000 | 95 | atmospheric pressure | 7 |
| Ex.6 | 2L open | 30.02 | 33.63 | reagent FeSO₄ | 1.2 | 1000 | 95 | atmospheric pressure | 7 |
| Ex.7 | 2L open | 20.07 | 22.41 | reagent FeSO₄ | 1.45 | 1000 | 95 | atmospheric pressure | 7 |
| Ex.8 | 5L closed | 10.00 | 11.18 | reagent FeSO₄ | - | 360 | 175 | 0.3 | 5 |
| Ex.9 | 2L open | 10.01 | 11.21 | reagent FeSO₄ | 1.66 | 1000 | 95 | atmospheric pressure | 7 |
| Comp.1 | 1L closed | 47.97 | 53.77 | polyvalent iron (Fe³⁺) | about 1.0 | 500 | 175 | 0.2 | 5 |
| Comp.2 | 1L closed | 47.97 | 53.77 | polyvalent iron(Fe³⁺) | - | 500 | 175 | 0.2 | 5 |
| Comp.3 | 2L open | 50.13 | 56.00 | reagent FeSO₄ | 0.98 | 1000 | 70 | atmospheric pressure | 7 |
| Comp.4 | 2L open | 50.13 | 56.00 | reagent FeSO₄ | 0.96 | 1000 | 50 | atmospheric pressure · air | 7 |
| Ex.10 | 1L closed | 50.13+ zinc80g/L | 56.00 | reagent FeSO₄ | about 1. 0 | 500 | 175 | 0.2 | 5 |
| Ex.11 | 2L open | 50.13+ zinc40g/L | 56.00 | reagent FeSO₄ | 0.88 | 1000 | 95 | atmospheric pressure | 7 |
| Ex.12 | 2L open | 50.13+ copper40g/L | 56.00 | reagent FeSO₄ | 0.69 | 1000 | 95 | atmospheric pressure | 7 |
| Ex.13 | 2L open | 50.13+ Na40g/L | 56.00 | reagent FeSO₄ | 1.11 | 1000 | 95 | atmospheric pressure | 7 |
| Ex.14 | 2L open | 30.02+ zinc40g/L | 33.63 | reagent FeSO4 | 1.2 | 1000 | 95 | atmospheric pressure | 7 |
| Ex.15 | 2L open | 50.13+ copper40g/L | 56.00 | reagent FeSO₄ | 0.84 | 1000 | 95 | atmospheric pressure·air | 7 |

**Table 4**

| | Filtration Velocity (L/min) per 1m² of Filtration Area | pH | ORP (mV) |
|---|---|---|---|
| Ex.1 | 1211 | 0.25 | 553 |
| Ex.2 | 908 | 0.26 | 474 |
| Ex.3 | 454 | 0.01 | 596 |
| Ex.4 | 1211 | 0.51 | 517 |
| Ex.5 | 908 | -0.07 | 460 |
| Ex.6 | 1211 | 0.21 | 442 |
| Ex.7 | 1211 | 0.44 | 434 |
| Ex.8 | - | - | - |
| Ex.9 | 519 | 0.65 | 420 |
| Comp.1 | 1211 | 0.02 | 830 |
| Comp.2 | 606 | 0.7 | 673 |
| Comp.3 | 140 | 0.01 | 430 |
| Comp.4 | 44 | 0.45 | 310 |
| Ex.10 | 202 | -0.22 | 515 |
| Ex.11 | 908 | 0.04 | 468 |
| Ex.12 | 227 | -0.05 | 516 |
| Ex.13 | 454 | 0.31 | 467 |
| Hex. 14 | 606 | 0.3 | 462 |
| Ex.15 | 519 | 0.05 | 481 |

**Table 5**

| | FA (g/L) | Cu (mg/L) | As (g/L) | Fe (g/L) | Zn (mg/L) | Sn (mg/L) | Sb (mg/L) | Na (g/L) | Ca (mg/L) | Mg (mg/L) | S (g/L) |
|---|---|---|---|---|---|---|---|---|---|---|---|
| Ex.1 | 73 | 41 | 1.27 | 21.35 | 111 | 0 | 0 | 0.84 | 663 | 369 | 37.90 |
| Ex.2 | 73 | 24 | 1.37 | 21.00 | 61 | 0 | 0 | 0.99 | 630 | 341 | 35.97 |
| Ex.3 | 62 | 33 | 0.91 | 20.38 | 40880 | 0 | 0 | 0.64 | 515 | 317 | 55.40 |
| Ex.4 | 67 | 29 | 2.46 | 21.45 | 41145 | 0 | 0 | 0.874 | 456 | 320 | 54.87 |
| Ex.5 | 73 | 0 | 1.6 | 20.23 | 51 | - | - | 0.87 | 531 | 316 | 36.12 |
| Ex.6 | 42 | 14 | 0.76 | 11.45 | 35 | - | - | 0.48 | 409 | 183 | 20.46 |
| Ex.7 | 28 | 10 | 0.322 | 7.464 | 21 | - | - | 0.319 | 188 | 128 | 13.00 |
| Ex.8 | - | - | - | - | - | - | - | - | - | - | - |
| Ex.9 | 14 | 7 | 0.055 | 3.861 | 12 | - | - | 0.161 | 121 | 65 | 6.71 |
| Comp.1 | 117 | 37 | 6.79 | 20.28 | 171 | 0 | 6 | 1.21 | 598 | 518 | 48.26 |
| Comp.2 | 101 | 7 | 20.65 | 24.56 | 189 | 1 | 0 | 0.353 | 30 | 197 | 44.16 |
| Comp.3 | 73 | 28 | 0.95 | 20.67 | 49 | - | - | 0.96 | 542 | 335 | 37.22 |
| Comp.4 | 62 | 25 | 11.62 | 28.03 | 49 | - | - | 0.87 | 428 | 318 | 36.99 |
| Ex.10 | 65 | 37 | 1.42 | 22.54 | 75630 | 2 | 0 | 0.619 | 344 | 366 | 79.10 |
| Ex.11 | 73 | 0 | 1.34 | 22.08 | 43267 | - | - | 0.92 | 556 | 334 | 61.03 |
| Ex.12 | 64 | 37000 | 2.59 | 21.64 | 155 | - | - | 0.87 | 489 | 306 | 54.79 |
| Ex.13 | 71 | 23 | 1.04 | 19.6 | 52 | - | - | 40.77 | 649 | 314 | 66.58 |
| Ex.14 | 38 | 34 | 0.421 | 11.56 | 38021 | - | - | 0.58 | 386 | 184 | 40.34 |
| Ex.15 | 65 | 36617 | 1.21 | 20.17 | 129 | - | - | 0.76 | 436 | 298 | 55.61 |

Furthermore, 99 % of As in the solution after reaction was quinquevalent arsenic when the valency number of As was analyzed by the thionalide method, and all of Fe was ferric iron (or trivalent iron) when the valency number of Fe was analyzed by absorptiometry. The same results were obtained in other examples which will be described later.

On the other hand, the weight of the wet solid part obtained by the solid-liquid separation was measured. In addition, water was added to the wet solid part so that the amount of water was 1 L with respect to 100 g of the wet solid part, and then, repulping washing was carried out. In the repulping washing, the solution was stirred at 400 rpm for one hour while the temperature of the solution was set to be 30 °C. After the washing, a pressure filter was used for carrying out a solid-liquid separation again.

The weight of a cake obtained as a solid part by the solid-liquid separation was measured. Then, the cake was dried at 60 °C for 18 hours, and then, lightly crashed by an agate mortar to obtain a powder. With respect to the powder thus obtained, component analysis, eluted metal content test, measurement of wet particle size distribution, measurement of specific surface area by N₂ gas absorption method (BET one-point method), Beckman-type measurement of specific gravity, and measurement of density of the powder compressed at a pressure of one ton, were carried out. The component analysis was carried out by ICP after the cake was dissolved in water once. The wet particle size distribution was measured by means of a wet particle size distribution measuring apparatus (LA500 produced by Horiba Seisakusho). The measurement of specific surface area by N₂ gas absorption method was carried out by the BET one-point method using a specific surface area measuring apparatus (Monosorb produced by Yuasa Ionix, Co., Ltd.). On the basis of Bulletin No. 13 of the Ministry of the Environment of Japan, the eluted metal content test was carried out by analyzing the concentration of arsenic in a filtration (metal eluted solution) obtained by carrying out a solid-liquid separation using a membrane filter of 0.45 microns after shaking the mixture of 100 g of a solid part and 1L of water of pH 5 for six hours by means of a shaker for the exclusive use of eluted metal content test.

On the basis of the results of analysis, there were calculated the Fe/As ratio, the amount of generated residue (the amount of generated residue per 1 ton of As, derived from the grade of arsenic and water content), and the amount of liquid to be treated (the amount of liquid required to remove 1 ton of As, derived from the concentrations of As before and after the treatment).

With respect to the obtained powder, the powder X-ray diffraction was analyzed by means of an X-ray diffractometer (XRD). In the analysis of the powder X-ray diffraction, Cu-K α was used as a target (anticathode), and the wavelength λ was 1.5418 angstroms. In addition, the tube voltage was 50 kV (partially 40 kV), and the tube current was 300 mA. Moreover, the scanning speed was 0.01° /sec, the scanning angle 2 θ was 5° to 85° , and a scintillation counter was used. In addition, it was determined whether the powder was amorphous or crystalline on the basis of the fact that the obtained diffraction image was crystalline or that a harrow pattern was observed about a portion on the low angle side, and the particles of the powder was observed by means of a scanning electron microscope (SEM).

The results are shown in Tables 6 through 8.

**Table 6**

| | Precipitation Rate(%) | | Total Amount (m³) of Solution per 1 ton of As | Amount (m³) of As Solution per 1 ton of As |
|---|---|---|---|---|
| | As | Fe | | |
| Ex.1 | 97.5 | 61.9 | 20 | 14 |
| Ex.2 | 97.3 | 62.5 | 21 | 14 |
| Ex.3 | 98.2 | 63.6 | 20 | 14 |
| Ex.4 | 95.1 | 61.7 | 21 | 15 |
| Ex.5 | 96.8 | 63.9 | 21 | 14 |
| Ex.6 | 97.5 | 66.0 | 34 | 14 |
| Ex.7 | 91.3 | 62.0 | 51 | 14 |
| Ex.8 | - | - | - | - |
| Ex.9 | 99.5 | 65.6 | 100 | 14 |
| Comp.1 | 85.8 | 62.3 | 24 | 16 |
| Comp.2 | 57.0 | 54.3 | 37 | 24 |
| Comp.3 | 98.1 | 63.1 | 20 | 14 |
| Comp.4 | 76.8 | 49.9 | 26 | 18 |
| Ex.10 | 97.2 | 59.8 | 21 | 14 |
| Ex.11 | 93.9 | 60.6 | 20 | 14 |
| Ex.12 | 94.8 | 61.4 | 21 | 15 |
| Ex.13 | 97.9 | 65.0 | 20 | 14 |
| Ex.14 | 99.2 | 79.4 | 20 | 14 |
| Ex.15 | 97.6 | 64.0 | 20 | 14 |

**Table 7**

| | | Grade of Solid Part | | | | | | | | | | |
|---|---|---|---|---|---|---|---|---|---|---|---|---|
| | Solid Part (g/L) | Water Content (%) | Cu (ppm) | As (%) | Fe (%) | Zn (ppm) | Sn (ppm) | Sb (ppm) | Na (ppm) | Ca (ppm) | Mg (ppm) | S (ppm) |
| Ex.1 | 124 | 10.9 | 80 | 35.5 | 26.7 | 56 | 310 | 929 | 158 | 12 | 0 | 519 |
| Ex.2 | 144 | 5.1 | 120 | 30.1 | 24.3 | 41 | 367 | 680 | 232 | 80 | 16 | 6863 |
| Ex.3 | 147 | 8.2 | 50 | 34.7 | 25.3 | 16657 | 191 | 679 | 1282 | 72 | 10 | 3313 |
| Ex.4 | 165 | 8.6 | 84 | 29.7 | 23.4 | 11100 | 202 | 956 | 101 | 11 | 0 | 7670 |
| Ex.5 | 155 | 4.2 | 124 | 30.7 | 24.3 | 49 | 191 | 955 | 68 | 12 | 0 | 4877 |
| Ex.6 | 93 | 4.0 | 125 | 30.8 | 23.5 | 40 | 184 | 1153 | 115 | 8 | 0 | 4350 |
| Ex.7 | 67 | 9.6 | 133 | 31.7 | 24.3 | 6 | 198 | 1135 | 167 | 16 | 0 | 4100 |
| Ex.8 | - | 38.5 | - | 33.1 | 29.5 | - | - | - | - | - | - | 2000 |
| Ex.9 | 39 | 20.4 | 105 | 31.5 | 24.3 | 2 | 199 | 1098 | 104 | 8 | 0 | 3100 |
| Comp.1 | 135 | 3.1 | 40 | 29.3 | 22.7 | 59 | 187 | 253 | 149 | 19 | 0 | 16522 |
| Comp.2 | 127 | 13.1 | 20 | 27.8 | 25.1 | 84 | 44 | <1 | 227 | 75 | 15 | 22900 |
| Comp.3 | 219 | 30.9 | 109 | 31.3 | 24.7 | 34 | 196 | 1059 | 159 | 24 | 0 | 5900 |
| Comp.4 | 168 | 30.0 | 126 | 31.5 | 23.7 | 48 | 217 | 1374 | 118 | 16 | 0 | 3607 |
| Ex.10 | 147 | 11.5 | 57 | 33.2 | 24.3 | 22500 | 196 | 669 | 1364 | 582 | 6 | 3254 |
| Ex.11 | 165 | 6.9 | 85 | 30.7 | 23.9 | 7186 | 192 | 1216 | 132 | 12 | 0 | 5677 |
| Ex.12 | 167 | 7.5 | 23500 | 29.8 | 22.3 | 24 | 193 | 961 | 230 | 48 | 0 | 13700 |
| Ex.13 | 162 | 6.8 | 142 | 31.1 | 24.4 | 45 | 169 | 991 | 587 | 42 | 0 | 6100 |
| Ex.14 | 97 | 5.3 | 85 | 30.6 | 23.2 | 12980 | 198 | 1027 | 189 | 26 | 0 | 9400 |
| Ex.15 | 164 | 6.1 | 19340 | 30.7 | 23.0 | 53 | 179 | 915 | 319 | 13 | 0 | 7051 |

**Table 8**

| | Fe/ As Ratio | Amount (ton) of Residue Produced per 1 ton of As | Concentration of Eluted As (mg/L) | Particle Size Distribution | | BET (m²/g) | Specific Grav ity (g/cc) | Density (g/cc) of Compressed Powder | XRD |
|---|---|---|---|---|---|---|---|---|---|
| | | | | Mean Particle Diameter (µm) | Percentage(%) of Particles of not greater than 5µm | | | | |
| Ex.1 | 1.01 | 3.16 | 0.03 | 18.9 | 0.0 | 0.37 | 3.72 | 2.28 | crystalline |
| Ex.2 | 1.08 | 3.50 | 0.09 | 22.6 | 0.0 | 0.18 | 3.21 | 2.02 | crystalline |
| Ex.3 | 0.98 | 3.14 | 0.05 | 103.7 | 0.0 | 0.36 | 3.70 | 2.37 | crystalline |
| Ex.4 | 1.05 | 3.68 | 0.06 | 30.3 | 0.0 | 0.12 | 3.27 | 2.16 | crystalline |
| Ex.5 | 1.07 | 3.20 | 0.02 | 14.7 | 0.6 | 0.17 | 3.27 | 2.07 | crystalline |
| Ex.6 | 1.02 | 3.17 | 0.02 | 17.0 | 0.4 | 0.19 | 3.27 | 2.09 | crystalline |
| Ex.7 | 1.03 | 3.38 | 0.02 | 10.2 | 5.0 | 0.46 | 3.28 | 2.03 | crystalline |
| Ex.8 | 1.20 | 4.91 | 0.02 | 1.8 | 100 | 8.27 | 3.94 | - | crystalline |
| Ex.9 | 1.03 | 3.87 | 0.01 | 3.6 | 64.7 | 1.79 | 3.31 | 1.98 | crystalline |
| Comp.1 | 1.04 | 3.53 | 0.48 | (58.9) | (0.0) | (0.14) | 3.12 | 2.05 | crystalline |
| Comp.2 | 1.21 | 4.14 | 4.45 | 10.3 | 6.7 | 2.67 | 3.31 | 2.05 | crystalline |
| Comp.3 | 1.06 | 4.45 | 0.32 | 3.0 | 70.9 | 2.05 | 3.25 | 1.95 | crystalline |
| Comp.4 | 1.01 | 4.35 | 22.84 | 2.3 | 77.5 | 3.11 | 3.26 | 2.00 | crystalline |
| Ex.10 | 0.98 | 3.40 | 0.21 | 92.1 | 0.0 | 0.57 | 3.60 | 2.36 | crystalline |
| Ex.11 | 1.04 | 3.38 | 0.02 | 15.0 | 0.1 | 0.25 | 3.26 | 1.99 | crystalline |
| Ex.12 | 1.00 | 3.51 | 0.08 | 13.8 | 5.7 | 0.38 | 3.22 | 2.00 | crystalline |
| Ex.13 | 1.05 | 3.29 | 0.07 | 15.7 | 0.2 | 0.28 | 3.32 | 1.97 | crystalline |
| Ex.14 | 1.02 | 1.95 | 0.04 | 16.1 | 1.1 | 0.21 | 3.28 | 2.08 | crystalline |
| Ex.15 | 1.01 | 3.36 | <0.01 | 8.3 | 8.9 | 0.37 | 3.27 | 1.95 | crystalline |

As shown in Table 8, the Fe/As (molar ratio) of the obtained powder was 1.01, and it was found from the results of X-ray diffraction that the obtained powder was a powder of a crystalline compound of iron and arsenic. The concentration of arsenic eluted from the obtained powder of the compound of iron and arsenic was 0.03 mg/L which was far lower than a reference value (0.3 mg/L).

### Example 2

The same arsenic containing solution (the solution of composition shown in Table 2) as that in Example 1 was used for allowing a reaction by the same method as that in Example 1, except that the stirring speed was 1000 rpm and the reaction temperature (the final set temperature) was 95 °C.

Furthermore, the filtration velocity (per 1m² of filtration area of the pressure filter) was obtained by measuring the time from the starting of the pressure filtration to the blowing of air through the filter when the solid-liquid separation of a reaction product is carried out. In addition, the pH and oxidation-reduction potential (ORP) of the separated solution after reaction were measured. Moreover, the measurement of the concentration of sulfuric acid (the concentration of free acid (FA)) and component analysis for each element in the solution after reaction were carried out by ICP . The conditions and results are shown in Tables 3 through 5.

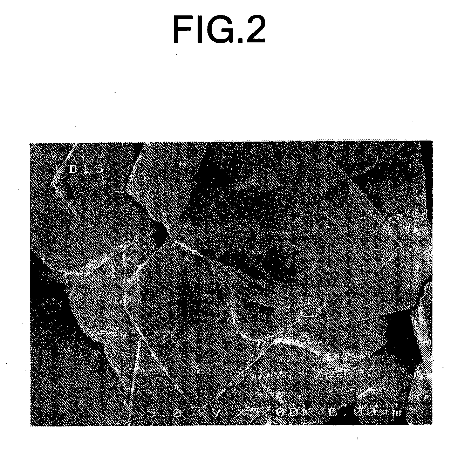

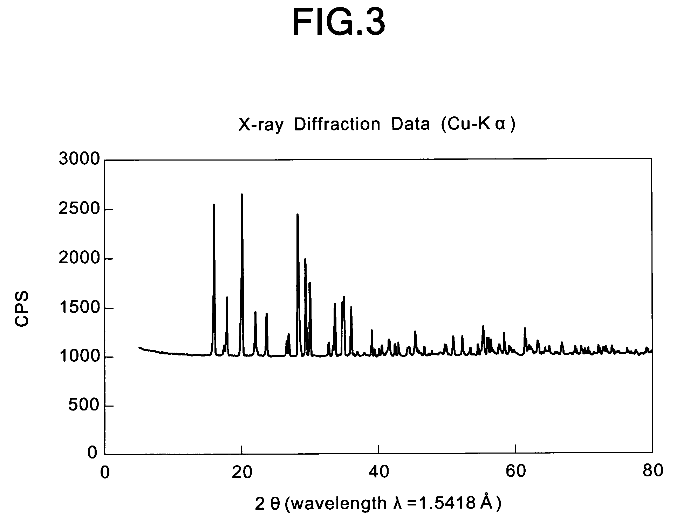

With respect to a powder obtained by treating a solid part, which was obtained by the solid-liquid separation of the reaction product, by the same method as that in Example 1, the same measurements and calculations as those in Example 1 were carried out. The results are shown in Tables 6 through 8. In addition, the scanning electron micrograph (SEM) (x 5000) of the powder obtained in this example, and the X-ray diffraction (XRD) data thereof are shown in FIGS. 2 and 3, respectively.

As can be seen from the results in Examples 1 and 2, if a high purity arsenic containing solution having a high concentration of arsenic is allowed to react with iron, a precipitate (deposit) can be obtained regardless of the reaction temperature, and the percentage of removal of arsenic is 97 % which is a good value. The obtained deposit is crystalline, and has a low water content, a small volume of solid part, a high content of arsenic and a good filterability. In addition, salts adhering to the deposit can be simply removed by washing. Therefore, the concentration of arsenic eluted from the deposit is far lower than the reference value (0.3 m/L).

### Example 3

The same arsenic containing solution (the solution of composition shown in Table 2) as that in Example 1 was used for allowing a reaction by the same method as that in Example 1, except that 40 g/L of zinc was allowed to coexist in the solution. Then, the solid part obtained by the solid-liquid separation of the reaction product produced by the reaction was treated by the same method as that in Example 1. With respect to a powder thus obtained, the same measurements and calculations as those in Example 1 were carried out. The conditions and results are shown in Tables 3 through 8.

As shown in Table 8, the Fe/As (molar ratio) of the obtained powder was 0.98, and it was found from the results of X-ray diffraction that the obtained powder was a powder of a crystalline compound of iron and arsenic. The concentration of arsenic eluted from the obtained powder of the compound of iron and arsenic was 0.05 mg/L which was far lower than the reference value (0.3 mg/L).

### Example 4

The same arsenic containing solution (the solution of composition shown in Table 2) as that in Example 1 was used for allowing a reaction by the same method as that in Example 2, except that 40 g/L of zinc was allowed to coexist in the solution. Then, the solid part obtained by the solid-liquid separation of the reaction product produced by the reaction was treated by the same method as that in Example 2. With respect to a powder thus obtained, the same measurements and calculations as those in Example 1 were carried out. The conditions and results are shown in Tables 3 through 8.

As shown in Table 8, the Fe/As (molar ratio) of the obtained powder was 1.05, and it was found from the results of X-ray diffraction that the obtained powder was a powder of a crystalline compound of iron and arsenic. The concentration of arsenic eluted from the obtained powder of the compound of iron and arsenic was 0.06 mg/L which was far lower than the reference value (0.3 mg/L). From these results, it can be seen that a method for treating an arsenic containing solution according to the present invention can be applied to the treatment of a process solution in a zinc smelting process, since the concentration of arsenic eluted from the powder is very low even if zinc coexists in the arsenic containing solution.

### Example 5

The same arsenic containing solution (the solution of composition shown in Table 2) as that in Example 1 was used for allowing a reaction by the same method as that in Example 1, except that the arsenic containing solution was placed in a 2L open vessel (reaction vessel) of a glass and that the stirring speed was 1000 rpm, the reaction temperature (the final set temperature) was 95 °C and the reaction time was 7 hours. Then, the solid part obtained by the solid-liquid separation of the reaction product produced by the reaction was treated by the same method as that in Example 1. With respect to a powder thus obtained, the same measurements and calculations as those in Example 1 were carried out. The conditions and results are shown in Tables 3 through 8.

As shown in Table 8, the Fe/As (molar ratio) of the obtained powder was 1.07, and it was found from the results of X-ray diffraction that the obtained powder was a powder of a crystalline compound of iron and arsenic. The concentration of arsenic eluted from the obtained powder of the compound of iron and arsenic was 0.02 mg/L which was far lower than the reference value (0.3 mg/L).

### Example 6

The same arsenic containing solution (the solution of composition shown in Table 2) as that in Example 1 was used for allowing a reaction by the same method as that in Example 5, except that the arsenic containing solution was diluted with water so that the concentration of arsenic in the solution was 30.02 g/L and the concentration of iron in the solution was 33.63 g/L (the Fe/As ratio = 1.5). Then, the solid part obtained by the solid-liquid separation of the reaction product produced by the reaction was treated by the same method as that in Example 1. With respect to a powder thus obtained, the same measurements and calculations as those in Example 1 were carried out. The conditions and results are shown in Tables 3 through 8.

As shown in Table 8, the Fe/As (molar ratio) of the obtained powder was 1.02, and it was found from the results of X-ray diffraction that the obtained powder was a powder of a crystalline compound of iron and arsenic. The concentration of arsenic eluted from the obtained powder of the compound of iron and arsenic was 0.02 mg/L which was far lower than the reference value (0.3 mg/L).

### Example 7

The same arsenic containing solution (the solution of composition shown in Table 2) as that in Example 1 was used for allowing a reaction by the same method as that in Example 5, except that the arsenic containing solution was diluted with water so that the concentration of arsenic in the solution was 20.07 g/L and the concentration of iron in the solution was 22.41 g/L (the Fe/As ratio = 1.5). Then, the solid part obtained by the solid-liquid separation of the reaction product produced by the reaction was treated by the same method as that in Example 1. With respect to a powder thus obtained, the same measurements and calculations as those in Example 1 were carried out. The conditions and results are shown in Tables 3 through 8.

As shown in Table 8, the Fe/As (molar ratio) of the obtained powder was 1.03, and it was found from the results of X-ray diffraction that the obtained powder was a powder of a crystalline compound of iron and arsenic. The concentration of arsenic eluted from the obtained powder of the compound of iron and arsenic was 0.02 mg/L which was far lower than the reference value (0.3 mg/L).

### Example 8

A reaction was allowed by the same method as that in Example 1, except that a first grade arsenic solution (quinquevalent arsenic solution) containing 500 g/L of arsenic was diluted with water to be placed in a 5L closed vessel (reaction vessel) so that the concentration of arsenic in the solution was 10.00 g/L and the concentration of iron in the solution was 11.18 g/L (the Fe/As ratio = 1.5), in place of the same arsenic containing solution (the solution of composition shown in Table 2) as that in Example 1, and except that the stirring speed was 360 rpm, the partial pressure of oxygen was 0 .3 MPa and the repulping washing was carried out twice after the solid-liquid separation. Then, the solid part obtained by the solid-liquid separation of the reaction product produced by the reaction was treated by the same method as that in Example 1. With respect to a powder thus obtained, the same measurements and calculations as those in Example 1 were carried out. The conditions and results are shown in Tables 3 through 8.

As shown in Table 8, the Fe/As (molar ratio) of the obtained powder was 1.20, and it was found from the results of X-ray diffraction that the obtained powder was a powder of a crystalline compound of iron and arsenic. The concentration of arsenic eluted from the obtained powder of the compound of iron and arsenic was 0.02 mg/L which was far lower than the reference value (0.3 mg/L).

### Example 9

A reaction was allowed by the same method as that in Example 5, except that the concentration of arsenic in the solution placed in a 2L open vessel (reaction vessel) of a glass was 10.01 g/L and the concentration of iron in the solution was 11.21 g/L (the Fe/As ratio = 1.5). Then, the solid part obtained by the solid-liquid separation of the reaction product produced by the reaction was treated by the same method as that in Example 1. With respect to a powder thus obtained, the same measurements and calculations as those in Example 1 were carried out. The conditions and results are shown in Tables 3 through 8.

As shown in Table 8, the Fe/As (molar ratio) of the obtained powder was 1.03, and it was found from the results of X-ray diffraction that the obtained powder was a powder of a crystalline compound of iron and arsenic. The concentration of arsenic eluted from the obtained powder of the compound of iron and arsenic was 0.01 mg/L which was far lower than the reference value (0.3 mg/L).

### Comparative Example 1

A reaction was allowed by the same method as that in Example 1, except that a polyvalent iron (Fe³⁺) was used in place of the first grade FeSO₄ · 7H₂O and that the concentration of arsenic was 47.97 g/L and the concentration of iron was 53.77 g/L (the Fe/As ratio = 1.5). Then, the solid part obtained by the solid-liquid separation of the reaction product produced by the reaction was treated by the same method as that in Example 1. With respect to a powder thus obtained, the same measurements and calculations as those in Example 1 were carried out. The conditions and results are shown in Tables 3 through 8.

As shown in Table 8, the Fe/As (molar ratio) of the obtained powder was 1.04, and it was found from the results of X-ray diffraction that the obtained powder was a powder of a crystalline compound of iron and arsenic. The concentration of arsenic eluted from the obtained powder of the compound of iron and arsenic was 0.48 mg/L which was higher than the reference value (0.3 mg/L). Furthermore, in this comparative example, the mean particle diameter was large, the percentage of particles having a particle diameter of not greater than 5 micrometers was 0 %, and the BET specific surface area was small. However, from the results of the SEM image, it was found that the particles were coagulated without having any compact crystalline form, so that the mean particle diameter, the percentage of particles having a particle diameter of not greater than 5 micrometers, and the BET specific surface area were apparent values.

### Comparative Example 2

A reaction was allowed by the same method as that in Comparative Example 1, except that a solution obtained by dissolving arsenious acid in water so that the concentration of arsenic was 47.97 g/L was used in place of the same arsenic containing solution (the solution of composition shown in Table 2) as that in Example 1. Then, the solid part obtained by the solid-liquid separation of the reaction product produced by the reaction was treated by the same method as that in Example 1. With respect to a powder thus obtained, the same measurements and calculations as those in Example 1 were carried out. The conditions and results are shown in Tables 3 through 8.

As shown in Table 8, the Fe/As (molar ratio) of the obtained powder was 1.21, and it was found from the results of X-ray diffraction that the obtained powder was a powder of a crystalline compound of iron and arsenic. The concentration of arsenic eluted from the obtained powder of the compound of iron and arsenic was 4.45 mg/L which was far higher than the reference value (0.3 mg/L).

### Comparative Example 3

A reaction was allowed by the same method as that in Example 5, except that the final set temperature (reaction temperature) was 70 °C. Then, the solid part obtained by the solid-liquid separation of the reaction product produced by the reaction was treated by the same method as that in Example 1. With respect to a powder thus obtained, the same measurements and calculations as those in Example 1 were carried out. The conditions and results are shown in Tables 3 through 8.

As shown in Table 8, the Fe/As (molar ratio) of the obtained powder was 1.06, and it was found from the results of X-ray diffraction that the obtained powder was a powder of a crystalline compound of iron and arsenic. The concentration of arsenic eluted from the obtained powder of the compound of iron and arsenic was 0.32 mg/L which was higher than the reference value (0.3 mg/L).

### Comparative Example 4

A reaction was allowed by the same method as that in Example 5, except that the final set temperature (reaction temperature) was 50 °C and that air was blown in place of oxygen gas. Then, the solid part obtained by the solid-liquid separation of the reaction product produced by the reaction was treated by the same method as that in Example 1. With respect to a powder thus obtained, the same measurements and calculations as those in Example 1 were carried out. The conditions and results are shown in Tables 3 through 8.

As shown in Table 8, the Fe/As (molar ratio) of the obtained powder was 1.01, and it was found from the results of X-ray diffraction that the obtained powder was a powder of a crystalline compound of iron and arsenic. The concentration of arsenic eluted from the obtained powder of the compound of iron and arsenic was 22.84 mg/L which was far higher than the reference value (0.3 mg/L).

### Example 10

The same arsenic containing solution (the solution of composition shown in Table 2) as that in Example 1 was used for allowing a reaction by the same method as that in Example 1, except that 80 g/L of zinc was allowed to coexist in the solution. Then, the solid part obtained by the solid-liquid separation of the reaction product produced by the reaction was treated by the same method as that in Example 1. With respect to a powder thus obtained, the same measurements and calculations as those in Example 1 were carried out. The conditions and results are shown in Tables 3 through 8.

As shown in Table 8, the Fe/As (molar ratio) of the obtained powder was 0.98, and it was found from the results of X-ray diffraction that the obtained powder was a powder of a crystalline compound of iron and arsenic. The concentration of arsenic eluted from the obtained powder of the compound of iron and arsenic was 0.21 mg/L which was lower than the reference value (0.3 mg/L). From these results, it can be seen that, since the concentration of arsenic is low even if the concentration of zinc in the arsenic containing solution is a high concentration of 80 g/L, a method for treating an arsenic containing solution according to the present invention can be applied to the treatment of a process solution in a zinc smelting process even if the concentration of zinc in the process solution is high, so that it is possible to correspond to variations in the zinc smelting process.

### Example 11

The same arsenic containing solution (the solution of composition shown in Table 2) as that in Example 1 was used for allowing a reaction by the same method as that in Example 5, except that 40 g/L of zinc was allowed to coexist in the solution. Then, the solid part obtained by the solid-liquid separation of the reaction product produced by the reaction was treated by the same method as that in Example 5. With respect to a powder thus obtained, the same measurements and calculations as those in Example 1 were carried out. The conditions and results are shown in Tables 3 through 8.

As shown in Table 8, the Fe/As (molar ratio) of the obtained powder was 1.04, and it was found from the results of X-ray diffraction that the obtained powder was a powder of a crystalline compound of iron and arsenic. The concentration of arsenic eluted from the obtained powder of the compound of iron and arsenic was 0.02 mg/L which was far lower than the reference value (0.3 mg/L). From these results, it can be seen that a method for treating an arsenic containing solution according to the present invention can be applied to the treatment of a process solution in a usual zinc smelting process, since the concentration of arsenic eluted from the powder is very low even if zinc coexists in the arsenic containing solution and since there is no influence even if the pressure of blown oxygen is atmospheric pressure when the concentration of arsenic in the arsenic containing solution is high.

### Example 12

The same arsenic containing solution (the solution of composition shown in Table 2) as that in Example 1 was used for allowing a reaction by the same method as that in Example 5, except that 40 g/L of copper was allowed to coexist in the solution. Then, the solid part obtained by the solid-liquid separation of the reaction product produced by the reaction was treated by the same method as that in Example 5. With respect to a powder thus obtained, the same measurements and calculations as those in Example 1 were carried out. The conditions and results are shown in Tables 3 through 8.

As shown in Table 8, the Fe/As (molar ratio) of the obtained powder was 1.00, and it was found from the results of X-ray diffraction that the obtained powder was a powder of a crystalline compound of iron and arsenic. The concentration of arsenic eluted from the obtained powder of the compound of iron and arsenic was 0.08 mg/L which was far lower than the reference value (0.3 mg/L). From these results, it can be seen that a method for treating an arsenic containing solution according to the present invention can be applied to the treatment of a process solution in a copper smelting process, since the concentration of arsenic eluted from the powder is very low even if copper coexists in the arsenic containing solution. It can be also seen that a method for treating an arsenic containing solution according to the present invention can be applied to the treatment of a process solution in a usual copper smelting process, since there is no influence even if the pressure of blown oxygen is atmospheric pressure when the concentration of arsenic in the arsenic containing solution is high.

### Example 13

The same arsenic containing solution (the solution of composition shown in Table 2) as that in Example 1 was used for allowing a reaction by the same method as that in Example 5, except that 40 g/L of sodium was allowed to coexist in the solution. Then, the solid part obtained by the solid-liquid separation of the reaction product produced by the reaction was treated by the same method as that in Example 5. With respect to a powder thus obtained, the same measurements and calculations as those in Example 1 were carried out. The conditions and results are shown in Tables 3 through 8.

As shown in Table 8, the Fe/As (molar ratio) of the obtained powder was 1.05, and it was found from the results of X-ray diffraction that the obtained powder was a powder of a crystalline compound of iron and arsenic. The concentration of arsenic eluted from the obtained powder of the compound of iron and arsenic was 0.07 mg/L which was far lower than the reference value (0.3 mg/L). From these results, it can be seen that a method for treating an arsenic containing solution according to the present invention can be applied to the treatment of a waste alkali solution and the treatment of a solution in which sodium remains in the previous process, since the concentration of arsenic eluted from the powder is very low even if sodium coexists in the arsenic containing solution. It can be also seen that there is no influence even if the pressure of blown oxygen is atmospheric pressure when the concentration of arsenic in the arsenic containing solution is high.

### Example 14

The same arsenic containing solution (the solution of composition shown in Table 2) as that in Example 1 was used for allowing a reaction by the same method as that in Example 6, except that 40 g/L of copper was allowed to coexist in the solution. Then, the solid part obtained by the solid-liquid separation of the reaction product produced by the reaction was treated by the same method as that in Example 6. With respect to a powder thus obtained, the same measurements and calculations as those in Example 1 were carried out. The conditions and results are shown in Tables 3 through 8.

As shown in Table 8, the Fe/As (molar ratio) of the obtained powder was 1.02, and it was found from the results of X-ray diffraction that the obtained powder was a powder of a crystalline compound of iron and arsenic. The concentration of arsenic eluted from the obtained powder of the compound of iron and arsenic was 0.04 mg/L which was far lower than the reference value (0.3 mg/L). From these results, it can be seen that a method for treating an arsenic containing solution according to the present invention can be applied to the treatment of a process solution in a usual zinc smelting process even if the concentration of arsenic in the process solution in the zinc smelting process is low to some extent, since there is no influence even if the pressure of blown oxygen is atmospheric pressure when the concentration of arsenic in the arsenic containing solution is decreased to about 30 g/L.

### Example 15

A reaction was allowed by the same method as that in Example 12, except that air was blown in place of oxygen gas. Then, the solid part obtained by the solid-liquid separation of the reaction product produced by the reaction was treated by the same method as that in Example 12. With respect to a powder thus obtained, the same measurements and calculations as those in Example 1 were carried out. The conditions and results are shown in Tables 3 through 8.

As shown in Table 8, the Fe/As (molar ratio) of the obtained powder was 1.01, and it was found from the results of X-ray diffraction that the obtained powder was a powder of a crystalline compound of iron and arsenic. The concentration of arsenic eluted from the obtained powder of the compound of iron and arsenic was not higher than 0.01 mg/L which was far lower than the reference value (0.3 mg/L). From these results, it can be seen that a method for treating an arsenic containing solution according to the present invention can be applied to the treatment of a process solution in a usual copper smelting process and that it is possible to reduce costs, since there is no influence even if a gas having a low concentration of oxygen, such as air, was blown at atmospheric pressure when the concentration of arsenic in the arsenic containing solution is high.

## Claims

1. A method for treating an arsenic containing solution, the method comprising the steps of:
adding ferrous ions to an arsenic containing solution, which contains 10 g/L or more of arsenic, so as to cause a ratio (Fe/As) of iron to arsenic in the solution to be not less than 1;
adding an oxidizing agent to the solution to allow a reaction at a temperature of not lower than 70 °C while stirring the solution;
carrying out a solid-liquid separation of the solution after the reaction; and
recovering a solid part separated by the solid-liquid separation.

2. A method for treating an arsenic containing solution as set forth in claim 1, wherein the concentration of arsenic in said arsenic containing solution is not less than 20 g/L.

3. A method for treating an arsenic containing solution as set forth in claim 1, wherein iron sulfate (II) with seven hydrate salts (FeSO₄ • 7H₂O) is added to said arsenic containing solution as said ferrous ions.

4. A method for treating an arsenic containing solution as set forth in claim 1, wherein said oxidizing agent is oxygen gas.

5. A method for treating an arsenic containing solution as set forth in claim 1, wherein said arsenic containing solution is produced by a method comprising the steps of:
adding an arsenic containing substance to an alkali solution to adjust the solution to a pH of not lower than 10 to leach the arsenic containing substance with alkali while oxidizing the arsenic containing substance, and then, carrying out a solid-liquid separation to obtain a leached arsenic containing solution;
adding an alkaline earth metal or a salt thereof to the leached arsenic containing solution, and then, carrying out a solid-liquid separation to obtain a residue containing a compound of arsenic and the alkaline earth metal; and
washing the residue to add the washed residue to a sulfuric acid solution, and then, carrying out a solid-liquid separation to obtain an arsenic containing solution.

6. A method for treating an arsenic containing solution as set forth in claim 5, wherein a substance containing sulfur and arsenic is used as said arsenic containing substance when said arsenic containing solution is produced, and the amount of the alkaline earth metal or salt thereof to be added to said leached arsenic containing solution is not less than the required amount of the alkaline earth metal or salt thereof to form said compound of arsenic and the alkaline earth metal.

7. A method for treating an arsenic containing solution as set forth in claim 5, which further comprises the step of adding sulfur to said arsenic containing substance or said leached arsenic containing solution if said arsenic containing substance contains no sulfur when said arsenic containing solution is produced, and wherein the amount of the alkaline earth metal or salt thereof to be added to said leached arsenic containing solution is not less than the required amount of the alkaline earth metal or salt thereof to form said compound of arsenic and the alkaline earth metal.
